# EUROPÄISCHE PATENTSCHRIFT

(11) **EP 2 735 478 B1**
(45) Veröffentlichungstag und Bekanntmachung des Hinweises auf die Patenterteilung: **09.09.2015**
(21) Anmeldenummer: 13193859.9
(22) Anmeldetag: 21.11.2013
(51) Int. Cl.: B60R 1/06

(54) **Spiegelkopf, insbesondere für einen Fahrzeugaußenspiegel**
Mirror head, in particular for an exterior vehicle mirror
Tête de rétroviseur, notamment pour un rétroviseur extérieur de véhicule

(30) Priorität: 22.11.2012 DE 102012221348
(43) Veröffentlichungstag der Anmeldung: 28.05.2014
(73) Patentinhaber: MEKRA LANG GmbH & Co. KG, 91465 Ergersheim (DE)
(72) Erfinder: Lang, Werner, 91465 Ergersheim (DE); Finkenberger, Elmar, 91587 Adelshofen (DE); Seiboth, Wolfgang, 91438 Bad Windsheim (DE); CENTMAYER, Stefan, 91465 Ergersheim (DE)
(74) Vertreter: Winter, Brandl, Fürniss, Hübner, Röss, Kaiser, Polte - Partnerschaft mbB

(56) Entgegenhaltungen:
- EP-A1- 2 228 260
- DE-A1- 4 009 444
- DE-A1- 4 429 604
- DE-A1-102008 053 177
- DE-A1-102012 001 739
- DE-U- 6 606 058

## Beschreibung

Die Erfindung betrifft einen Spiegelkopf, insbesondere für einen Fahrzeugaußenspiegel gemäß dem Oberbegriff des Anspruchs 1.

Herkömmliche Spiegelköpfe, wie sie z.B. aus der EP 1 514 732 B2 bzw. der DE 10 2008 053 177 A1 bekannt sind, umfassen ein Spiegelgehäuse mit Glaseinheit und ein Anschlussbauteil mittels dem der Spiegelkopf an einem Fahrzeug oder an einer Haltevorrichtung befestigt wird. Anschlussbauteil und Spiegelgehäuse sind hierbei getrennte Bauteile. Dies ist hinsichtlich der Stabilität, insbesondere bei größeren Spiegelköpfen von Vorteil, da das Anschlussbauteil getrennt von dem Spiegelgehäuse besonders stabil ausgelegt werden kann. Allerdings erhöht sich dadurch der Herstellungsaufwand, da bei einem mehrteiligen Aufbau des Spiegelkopfes eine Mehrzahl von Bauteilen hergestellt und montiert werden müssen. Insbesondere bei Spritzgussteilen, die bei Fahrzeugaußenspiegeln häufig verwendet werden, sind damit eine Mehrzahl von Spritzgusswerkzeugen notwendig, was zu entsprechend erhöhten Kosten führt.

Ausgehend von der EP 1 514 732 B2 bzw. der DE 10 2008 053 177 A1 ist es daher Aufgabe der vorliegenden Erfindung einen Spiegelkopf, insbesondere für einen Fahrzeugaußenspiegel, anzugeben dessen Herstellung vereinfacht und kostengünstiger ist. Weiter offenbart die DE 44 29 604 A1 einen Spiegelkopf gemäß dem Oberbegriff des Anspruchs 1.

Die Lösung dieser Aufgabe erfolgt durch die Merkmale des Anspruchs 1.

Dadurch, dass das Spiegelgehäuse und Anschlussbauteil einteilig als Integralbauteil ausgeführt sind, ist nur ein Werkzeug für eine Spritzgussform notwendig. Auch erübrigt sich die Montage von Spiegelgehäuse an dem Anschlussbauteil. Hierdurch werden die Herstellungskosten reduziert. Derartige Spiegelköpfe werden vorzugsweise als Fahrzeugaußenspiegel und insbesondere im Nutzfahrzeugbereich eingesetzt.

Durch die vorteilhaften Ausgestaltungen der Erfindung ergeben sich ein leichter und dennoch stabiler Spiegelkopf.

Im Anbindungsbereich können entweder Montageelemente für eine manuelle Verstelleinrichtung oder Montageelemente für eine elektromotorische Verstelleinrichtung vorgesehen sein.

Gemäß der vorteilhaften Ausgestaltung der Erfindung sind im Anbindungsbereich immer erste Montageelemente für eine manuelle Verstelleinrichtung und auch zweite Monotageelemente für eine elektromotorische Verstelleinrichtung vorgesehen. Damit ist unabhängig von der Art der Verstelleinrichtung nur eine Art von Integralbauteil nötig. Dies führt zu einer Kostenreduzierung.

Durch die vorteilhafte Ausgestaltung der Erfindung wird die Stabilität des Spiegelkopfes erhöht. Durch die Doppelwandigkeit im Bereich des Anbindungsbereichs wird die Stabilität und die Kraftübertragung zwischen Anbindungsbereich und Fahrzeug verbessert. Dabei ist der doppelwandige Bereich des Anbindungsbereiches dazu ausgelegt ein Kabel und eine Steckverbindung aufzunehmen. Der doppelwandige Bereich ist außerdem von der schalenförmigen Aufnahme sowie der Glaseinheit durch eine Wand getrennt, und lediglich durch eine Kabeldurchführung verbunden.

Durch die vorteilhafte Ausgestaltung der Erfindung wird die Montage des Spiegelkopfes an einem Fahrzeug vereinfacht und kann insbesondere von einer Person alleine durchgeführt werden. Dabei wird der Montagevorsprung in die komplementär ausgebildete Öffnung eingeführt, wobei durch die vorteilhafte Ausgestaltung des Montagevorsprungs, der äußere Teil des Spiegelkopfes beim Loslassen durch die Schwerkraft nach unten sinkt, der Spiegelkopf zwischen Montagevorsprung und der ausgebildeten Öffnung geklemmt wird und sich folglich selbst trägt, ohne dass er von einer Person gehalten werden muss. Die Fixierung an der Fahrzeuganbindung kann folglich ohne Halten des Spiegelkopfes vorgenommen werden. Weiterhin ermöglicht die Fixierung durch nur zwei Schrauben eine weitere Gewichtsersparnis, da andernfalls anstatt des Montagevorsprungs mindestens eine weitere Schraube eingesetzt werden müsste. Die komplementär ausgebildete Öffnung kann dabei auf einfache Weise in einem Karosserieteil, wie beispielsweise einer Tür aus einem tiefgezogenen Blech, eingebracht werden und erfordert keine weiteren konstruktiven Vorrichtungen wie eine Buchse oder einen Klipp.

Durch leicht konische Ausgestaltung des Montagevorsprungs bewirkt, dass das In- , tegralbauteil leichter aus der Spritzgussform gelöst werden kann. Zusätzlich erleichtert die konische Form des Montagevorsprungs die Einführung des Montagevorsprungs in die dafür vorgesehene Öffnung in der Fahrzeugaußenfläche. Der konische Teil des Montagevorsprungs ist außerdem in einem Winkel orientiert, welcher in montiertem Zustand steiler ist als der Winkel zwischen dem Anbindungsbereich und der Anlagefläche. Dadurch wird eine sichere Klemmung und Arretierung des Spiegelkopfes erreicht.

Durch die vorteilhafte Ausgestaltung der Erfindung verklemmt sich der Montagevorsprung selbsttätig in der Öffnung an der Fahrzeugoberfläche und liegt mit der Anlagefläche der zweiten Wand an der Außenfläche des Fahrzeugs an. Zunächst wird der stiftförmige Montagevorsprung in die dafür vorgesehenen Öffnung eingeführt. Dann wird der Spiegelkopf in Richtung Anlagefläche bewegt bis die Anlagefläche an der Fahrzeugaußenfläche bzw. der Spiegelhaltevorrichtung anliegt. Dadurch erfolgt die selbsttätige Klemmung des Spiegelkopfes und folglich wird die Montage vereinfacht.

Durch die vorteilhafte Ausgestaltung der Erfindung wird die Steckverbindung für elektrische Anschlüsse zwischen dem Fahrzeug und dem Spielgelkopf in dem Anschlussteil fixiert, so dass die Gefahr einer losen Steckverbindung durch Vibrationen minimiert wird. Die Halteeinrichtung für die Steckverbindung kann z. B. als Klemm-, Clips-Vorrichtung, Schraubverbindung oder ähnliches ausgeführt sein.

Durch die vorteilhafte Ausgestaltung der Erfindung wird die Steckverbindung ist die Halteeinrichtung in dem becherförmigen Anschlussbauteil angeordnet und damit von außen nicht sichtbar.

Weitere Einzelheiten, Merkmale und Vorteile der Erfindung ergeben sich aus der nachfolgenden Beschreibung bevorzugter Ausführungsform anhand der Zeichnung.

Es zeigt:
Fig. 1 eine Aufsicht auf eine erste Ausführungsform des Spiegelkopfes montiert an einer Fahrzeugaußenseite,
Fig. 2 ein Schnitt entlang der Linie A-A in Fig. 1,
Fig. 3 ein Detail B aus Fig. 2,
Fig. 4 eine Ansicht auf den offenen Randbereiche des becherförmigen Anschlussteils der Ausführungsform nach den vorhergehenden Figuren,
Fig. 5 eine Aufsicht auf eine zweite Ausführungsform des Spiegelkopfs mit Darstellung des Anbindungsbereichs, der für die Montage einer manuellen Verstelleinheit ausgelegt ist,
Fig. 6 eine Schnittdarstellung entlang der Linie C-C in Fig. 5,
Fig. 7 eine Fig. 5 entsprechende Darstellung einer dritten Ausführungsform der Erfindung mit einem Anbindungsbereich, der für eine Montage für eine elektrische Verstelleinheit ausgelegt ist,
Fig. 8 eine Schnittdarstellung entlang der Linie D-D in Fig. 7,
Fig. 9 eine Fig. 5 bzw. Fig. 7 entsprechende Darstellung der ersten Ausführungsform der Erfindung mit einem Anbindungsbereich der sowohl Montageelemente für eine manuelle Verstelleinheit als auch Montageelemente für eine elektrische Verstelleinheit aufweist, und
Fig. 10 eine Schnittdarstellung entlang der Linie E-E in Fig. 9.

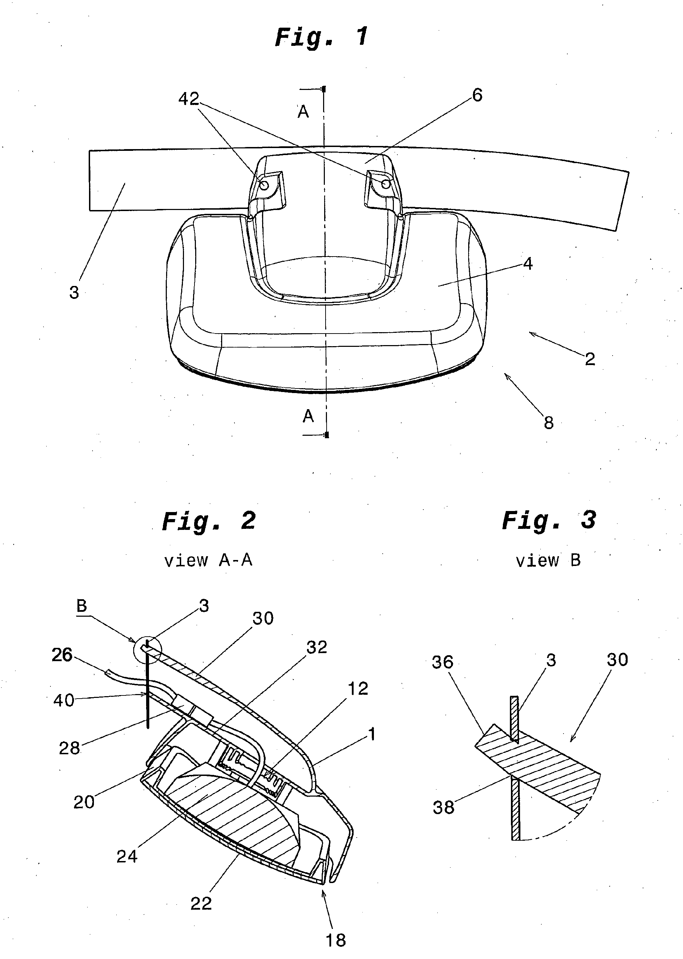

Die Figuren 1 bis 4 zeigen eine erste Ausführungsform eines erfindungsgemäßen Spiegelkopfes 2. Der Spiegelkopf 2 ist an einer Fahrzeugaußenfläche 3 montiert. Der Spiegelkopf 2 umfasst ein Spiegelgehäuse 4 von dessen Rückseite sich ein becherförmiges Anschlussbauteil 6 seitlich weg erstreckt. Das Spiegelgehäuse 4 und das Anschlussbauteil 6 sind als einteiliges Integralbauteil 8 ausgeführt. Das Spiegelgehäuse 4 weist eine schalenförmige Aufnahme 10 auf, in der in etwa zentral ein Anbindungsbereich 12 vorgesehen ist. Der Anbindungsbereich 12 weist sowohl erste als auch zweite Montageelemente 14 und 16 auf. Die ersten Montageelemente 14 dienen zur Montage einer Glaseinheit 18 mit Glasträgerplatte 20 und Spiegelscheibe 22, die manuell verstellbar ist und die zweiten Montageelemente 16 dienen zur Montage einer elektromotorischen Verstelleinrichtung 24. Die elektromotorische Verstelleinrichtung 24 wird über ein Kabel 26 mit einer Steckverbindung 28 angesteuert. Damit kann ein und dasselbe Integralbauteil sowohl bei manuellen als auch bei elektromotorischen Verstelleinrichtungen eingesetzt werden.

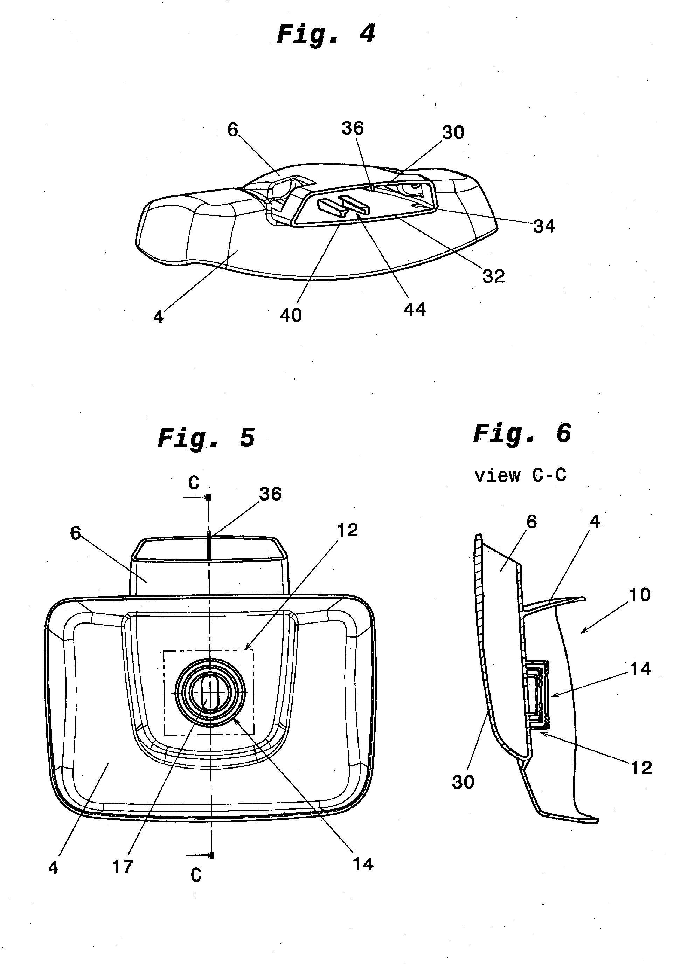

Wie aus Fig. 2 und 4 zu ersehen ist, ist das Anschlussbauteil 6 becher- oder sackförmig ausgebildet und umfasst eine erste Wand 30, die eine Außenwand 30 des Integralbauteils 8 darstellt, und eine zweite Wand 32, die die Rückseite oder Bodenseite des Spiegelgehäuses 4 bildet. Das becherförmige Anschlussbauteil 6 endet in einem offenen Randbereich 34, der sich seitlich von dem Spiegelgehäuse 4 weg erstreckt. Wie aus Fig. 2 zu ersehen ist, ragt an dem offenen Randbereich 34 die erste Wand 30 bzw. die Außenwand über die zweite Wand 32 hinaus. In etwa mittig erstreckt sich von dem Rand der ersten Wand 30 ein stiftförmiger, leicht konisch geformter Montagevorsprung 36 weg. Wie aus der Detaildarstellung in Fig. 3 zu ersehen ist, greift der stiftförmige Montagevorsprung 36 in eine Öffnung 38 in der Fahrzeugaußenfläche 3 ein. Nach dem Einführen des stiftförmigen Montagevorsprungs 36 in die Öffnung 38 wird der Spiegelkopf 2 abgeknickt, so dass die Kante der zweiten Wand 32, die eine Anlagefläche 40 bildet, an der Fahrzeugaußenfläche 3 anliegt. Anschließend wird der Spiegelkopf 2 über eine Fahrzeuganbindung 42, z. B. in Form einer Schraubverbindung, fest mit der Fahrzeugaußenfläche 3 bzw. mit einer separaten Spiegelhaltevorrichtung verbunden.

Das Kabel 26 bzw. die lösbare Steckverbindung 28 wird in einer Halteeinrichtung 44 - siehe Fig. 4 - fixiert, so dass die Gefahr minimiert wird, dass sich die Steckverbindung 28 aufgrund von Vibrationen löst. Die Halteeinrichtung 44 kann als Klemm- oder Clips-, Schraub-Verbindung oder als Kombination davon ausgestaltet sein. Das Kabel 26 wird über eine Öffnung bzw. Durchbruch im Anbindungsbereich 12 in Form eines Langloches 17 über das Anschlussbauteil 6 zu den jeweiligen elektrischen Verbrauchern, z. B. einer elektromotorischen Verstelleinrichtung 24, geführt. Die Öffnung bzw. der Durchbruch für das Kabel 26 kann auch außerhalb des Anbindungsbereichs vorgesehen werden.

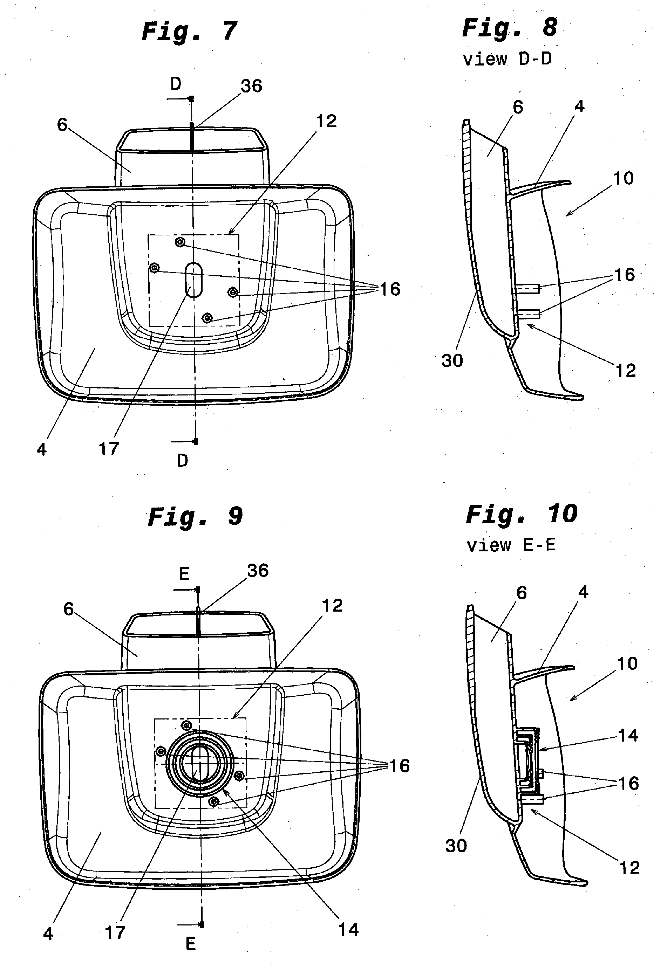

Fig. 5 und 6 zeigen Darstellungen einer zweiten Ausführungsform des Spiegelkopfes, der sich von der ersten Ausführungsform lediglich dadurch unterscheidet, dass im Anbindungsbereich 12 lediglich erste Montageelemente 14 zur Befestigung einer manuell verstellbaren Glaseinheit 18 vorgesehen sind. Fig. 7 und 8 zeigen eine analoge Darstellung zur Fig. 5 und 6 wobei im Anbindungsbereich 12 lediglich zweite Montageelemente 16 zur Montage der elektromotorischen Verstelleinrichtung 24 vorgesehen sind.

Fig. 9 und 10 schließlich zeigen den Fig. 5, 6 bzw. 7, 8 entsprechende Darstellungen der ersten Ausführungsform des Spiegelkopfes nach den Fig. 1 bis 4, wobei im Anbindungsbereich 12 sowohl erste Montageelemente 14 für eine manuell verstellbare Glaseinheit als auch zweite Montageelemente 16 für eine elektromotorische Verstelleinheit 24 vorgesehen sind. Folglich kann ein einziges Integralbauteil 8 sowohl für eine manuelle als auch für eine elektromotorische Verstelleinrichtung 24 eingesetzt werden.

### Bezugszeichenliste:

- 2: Spiegelkopf
- 3: Fahrzeugaußenfläche
- 4: Spiegelgehäuse
- 6: Anschlussbauteil
- 8: Integralbauteil
- 10: schalenförmige Aufnahme
- 12: Anbindungsbereich
- 14: erste Montageelemente
- 17: Öffnung in Form eines Langloches
- 16: zweite Montageelemente
- 18: Glaseinheit
- 20: Glasträgerplatte
- 22: Spiegelscheibe
- 24: elektromotorische Verstelleinrichtung
- 26: Kabel
- 28: Steckverbindung
- 30: erste Wand, Außenwand
- 32: zweite Wand
- 34: offener Randbereich
- 36: stiftförmiger Montagevorsprung
- 38: Öffnung in 40
- 40: Anlagefläche an 32
- 42: Fahrzeuganbindung
- 44: Halteeinrichtung

## Patentansprüche

1. Spiegelkopf (2), insbesondere für einen Fahrzeugaußenspiegel, mit einem Spiegelgehäuse (4), in dem wenigstens eine Spiegelscheibe (22) angeordnet ist, wobei die wenigstens eine Spiegelscheibe (22) auf einer Glasträgerplatte (20) montiert ist und die Spiegelscheibe (22) und die Glasträgerplatte (20) eine Glaseinheit (18) bilden und einem Anschlussbauteil (6) mittels dem der Spiegelkopf (2) an einer Spiegelhaltevorrichtung oder an einer Fahrzeugaußenfläche montierbar ist, wobei das Spiegelgehäuse (4) und Anschlussbauteil (6) einteilig als ein Integralbauteil (8) ausgebildet sind und wobei das Integralbauteil (8) einen Anbindungsbereich (12) mit Montageelementen (14, 16) aufweist, mittels denen die Glaseinheit (18) in dem Integralbauteil (8) montiert ist,
**dadurch gekennzeichnet, dass**:
- das Anschlussbauteil (6) becherförmig ausgebildet ist, eine erste und eine zweite Wand (30, 32) aufweist, die mit Abstand einander gegenüberliegen und in einem offenen Randbereich (34) enden,
- die erste Wand eine Außenwand (30) des Integralbauteils (8) darstellt, und
- an der zweiten Wand (32) des becherförmigen Anschlussteils (6) der Anbindungsbereich (12) vorgesehen ist.

2. Spiegelkopf nach Anspruch 1, **dadurch gekennzeichnet, dass** das Integralbauteil (8) aus Kunststoff, insbesondere aus faserverstärktem Kunststoff besteht.

3. Spiegelkopf nach Anspruch 1 oder 2, **dadurch gekennzeichnet, dass** das Integralbauteil (8) ein Spritzgussteil ist.

4. Spiegelkopf nach einem der vorherigen Ansprüche, **dadurch gekennzeichnet, dass** die Glaseinheit (18) mit einer manuell oder elektrisch betätigbaren Verstelleinrichtung (24) verbunden ist, und dass die Verstelleinrichtung (24) mit Glaseinheit (18) in dem Anbindungsbereich (12) in dem Integralbauteil (8) befestigt ist.

5. Spiegelkopf nach einem der vorherigen Ansprüche, **dadurch gekennzeichnet, dass** der Anbindungsbereich (12) sowohl Montageelemente (14) zur Montage der manuell betätigbaren Verstelleinrichtung als auch Montageelemente (16) zur Montage der elektrisch betätigbaren Verstelleinrichtung (24) aufweist.

6. Spiegelkopf nach einem der vorhergehenden Ansprüche, **dadurch gekennzeichnet, dass** das Integralbauteil (8) zumindest teilweise im Bereich des Anbindungsbereichs (12) doppelwandig ausgebildet ist.

7. Spiegelkopf nach einem der vorhergehenden Ansprüche, **dadurch gekennzeichnet, dass** das Anschlussbauteil (6) einen Montagevorsprung (36) aufweist, der zum Eingriff in eine komplementär ausgebildete Öffnung (38) an der Fahrzeugaußenfläche (3) oder an der Spiegelhaltevorrichtung ausgebildet ist.

8. Spiegelkopf nach Anspruch 7, **dadurch gekennzeichnet, dass** der Montagevorsprung (36) stiftförmig und insbesondere leicht konisch ausgebildet ist.

9. Spiegelkopf nach einem der vorherigen Ansprüche, **dadurch gekennzeichnet, dass** im offenen Randbereich (34) die erste Wand (30), die Außenwand, über die zweite Wand (32) hinausragt,
**dass** an der ersten Wand (30), der Außenwand, der stiftförmige Montagevorsprung (36) angeordnet ist, und
**dass** an der zweiten Wand (32) gegenüber dem stiftförmigen Montagevorsprung eine Anlagefläche (40) ausgebildet ist.

10. Spiegelkopf nach einem der vorhergehenden Ansprüche, **dadurch gekennzeichnet, dass** das Anschlussbauteil (6) eine Halteeinrichtung (44) zur Fixierung einer elektrischen Steckverbindung (28) aufweist.

11. Spiegelkopf nach Anspruch 10, **dadurch gekennzeichnet, dass** die Halteeinrichtung (44) im Inneren des becherförmigen Anschlussbauteils (6) angeordnet ist.

## Claims

1. Mirror head (2), in particular for an exterior vehicle mirror, comprising a mirror housing (4), in which at least one mirror disc (22) is arranged, wherein the at least one mirror disc (22) is mounted on a glass support plate (20) and the mirror disc (22) and the glass support plate (20) form a glass unit (18), and a connecting part (6) by means of which the mirror head (2) can be mounted on a mirror holding device or on an outer vehicle surface, wherein the mirror housing (4) and connecting part (6) are designed in one piece as an integral component (8) and wherein the integral component (8) comprises a connecting area (12) with mounting elements (14, 16), by means of which the glass unit (18) is mounted in the integral component (8),
**characterised in that**:
- the connecting part (6) is designed to be cup-like, comprises a first and a second wall (30, 32) which are spaced apart opposite one another and terminate in an open edge area (34),
- the first wall represents an outer wall (30) of the integral component (8), and
- the connecting area (12) is provided on the second wall (32) of the cup-like connecting part (6).

2. Mirror head according to claim 1, **characterised in that** the integral component (8) is made of plastic, in particular fibre-reinforced plastic.

3. Mirror head according to claim 1 or 2, **characterised in that** the integral component (8) is an injection moulded part.

4. Mirror head according to any one of the preceding claims, **characterised in that** the glass unit (18) is connected to a manually or electrically activated adjusting device (24), and **in that** the adjusting device (24) with glass unit (18) is secured in the connecting area (12) in the integral component (8).

5. Mirror head according to any one of the preceding claims, **characterised in that** the connecting area (12) comprises both mounting elements (14) for mounting the manually activated adjusting device as well as mounting elements (16) for mounting the electrically operated adjusting device (24).

6. Mirror head according to any one of the preceding claims, **characterised in that** the integral part (8) is designed to be double-walled at least partly in the connecting area (12).

7. Mirror head according to any one of the preceding claims, **characterised in that** the connecting part (6) comprises a mounting projection (36), which is designed for engaging in a complementary opening (38) on the vehicle outer surface (3) or on the mirror holding device.

8. Mirror head according to claim 7, **characterised in that** the mounting projection (36) is designed to be pin-like and in particular slightly conical.

9. Mirror head according to any one of the preceding claims, **characterised in that** in the open edge area (34) the first wall (30), the outer wall, projects over the second wall (32),
on the first wall (30), the outer wall, the pin-like mounting projection (36) is arranged, and
on the second wall (32) opposite the pin-like mounting projection a bearing surface (40) is formed.

10. Mirror head according to any one of the preceding claims, **characterised in that** the connecting part (6) comprises a holding device (44) for fixing an electric plug connection (28).

11. Mirror head according to claim 10, **characterised in that** the holding device (44) is arranged on the inside of the cup-like connecting part (6).

## Revendications

1. Tête de rétroviseur (2), en particulier pour un rétroviseur extérieur de véhicule, comportant un boîtier (4), dans lequel est agencé au moins un miroir (22), ledit au moins un miroir (22) étant monté sur une plaque porte-miroir (20), et le miroir (22) et la plaque porte-miroir (20) formant une unité de miroir (18), et comportant un élément de raccordement (6) au moyen duquel la tête de rétroviseur (2) peut être montée sur un support de rétroviseur ou sur une surface extérieure du véhicule, le boîtier (4) et l'élément de raccordement (6) étant réalisés d'un seul tenant sous la forme d'un élément intégral (8), et ledit élément intégral (8) comportant une zone d'attache (12) avec des éléments de montage (14, 16), au moyen desquels l'unité de miroir (18) est montée dans l'élément intégral (8),
**caractérisée en ce que** :
- l'élément de raccordement (6) est réalisé en forme de godet, comporte une première et une deuxième paroi (30, 32), qui sont disposées à distance en regard l'une de l'autre et se terminent en une zone d'extrémité (34) ouverte,
- la première paroi constitue une paroi extérieure (30) de l'élément intégral (8), et
- la zone d'attache (12) est prévue sur la deuxième paroi (32) de l'élément de raccordement (6) en forme de godet.

2. Tête de rétroviseur selon la revendication 1, **caractérisée en ce que** l'élément intégral (8) est réalisé en matière plastique, en particulier en matière plastique renforcée par des fibres.

3. Tête de rétroviseur selon la revendication 1 ou 2, **caractérisée en ce que** l'élément intégral (8) est une pièce moulée par injection.

4. Tête de rétroviseur selon l'une quelconque des revendications précédentes, **caractérisée en ce que** l'unité de miroir (18) est reliée à un dispositif de réglage (24) actionnable manuellement ou électriquement, et **en ce que** le dispositif de réglage (24) est fixé avec l'unité de miroir (18) dans la zone d'attache (12) dans l'élément intégral (8).

5. Tête de rétroviseur selon l'une quelconque des revendications précédentes, **caractérisée en ce que** la zone d'attache (12) comporte des éléments de montage (14) pour le montage du dispositif de réglage actionnable manuellement, de même que des éléments de montage (16) pour le montage du dispositif de réglage (24) actionnable électriquement.

6. Tête de rétroviseur selon l'une quelconque des revendications précédentes, **caractérisée en ce que** l'élément intégral (8) est réalisé à double paroi au moins en partie dans la région de la zone d'attache (12).

7. Tête de rétroviseur selon l'une quelconque des revendications précédentes, **caractérisée en ce que** l'élément de raccordement (6) comporte une saillie de montage (36) qui est réalisée pour entrer en prise dans une ouverture (38) complémentaire sur la surface extérieure (3) du véhicule ou sur le support de rétroviseur.

8. Tête de rétroviseur selon la revendication 7, **caractérisée en ce que** la saillie de montage (36) est réalisée en forme de broche et en particulier sous forme légèrement conique.

9. Tête de rétroviseur selon l'une quelconque des revendications précédentes, **caractérisée en ce que** dans la zone d'extrémité (34) ouverte, la première paroi (30), à savoir la paroi extérieure, s'avance au-delà de la deuxième paroi (32), **en ce que** la saillie de montage (36) en forme de broche est disposée sur la première paroi (30), à savoir la paroi extérieure, et **en ce qu'**une surface d'appui (40) est réalisée sur la deuxième paroi (32) en face de la saillie de montage en forme de broche.

10. Tête de rétroviseur selon l'une quelconque des revendications précédentes, **caractérisée en ce que** l'élément de raccordement (6) comporte un dispositif de fixation (44) destiné à la fixation d'une fiche de raccordement électrique (28) .

11. Tête de rétroviseur selon la revendication 10, **caractérisée en ce que** le dispositif de fixation (44) est disposé à l'intérieur de l'élément de raccordement (6) en forme de godet.
